# FASCICULE DE BREVET EUROPEEN

(11) **EP 2 791 557 B1**
(45) Date de publication et mention de la délivrance du brevet: **03.08.2016**
(21) Numéro de dépôt: 12813903.7
(22) Date de dépôt: 30.11.2012
(51) Int. Cl.: F16K 1/226, F16J 15/46, F16K 27/02

(54) **ROBINET A PAPILLON**
DROSSELVENTIL
BUTTERFLY VALVE

(30) Priorité: 14.12.2011 FR 1103839
(43) Date de publication de la demande: 22.10.2014
(73) Titulaire: KSB S.A.S, 92635 Gennevilliers Cedex (FR)
(72) Inventeur: DUBOY, Dominique, F-33170 Gradignan (FR)
(74) Mandataire: Eidelsberg, Victor Albert
(86) Numéro de dépôt international: PCT/FR2012/000496
(87) Numéro de publication internationale: WO 2013/088002

(56) Documents cités:
- EP-A2- 1 696 157
- WO-A1-2011/141641
- FR-A- 1 589 005
- FR-A1- 2 415 760
- US-A- 4 010 633

## Description

Dans le domaine de la robinetterie à papillon, les joints en élastomère sont souvent utilisés pour assurer l'étanchéité entre l'amont et l'aval d'un robinet à papillon, alors que le disque d'obturation est en position fermée.

Le joint d'étanchéité peut être placé soit dans le corps, soit sur l'obturateur.

Deux types de robinet à papillon sont concernés par l'invention. Ce sont les robinets à papillon centré et les robinets à papillon excentré et décalé.

Dans un robinet à papillon centré de petit diamètre, la solution la plus utilisée consiste à réaliser une manchette annulaire, enserrant la face intérieure du corps, formant l'étanchéité de l'amont vers l'aval et inversement en coopérant avec le papillon. Le papillon est solidaire d'un arbre d'actionnement passant dans une ouverture du corps, cette ouverture est opposée diamétralement à une ouverture de passage d'un axe. La manchette enveloppe, de plus, tout ou partie de chacune des faces latérales du corps pour assurer l'étanchéité vers l'extérieur aux brides de raccordement de la tuyauterie.

Pour favoriser le placement et le maintien en position de cette manchette, des ancrages sont ménagés dans le corps et des formes complémentaires sont prévues sur la manchette pour favoriser le maintien en position de cette manchette lors des sollicitations dues à la pression ou au vide, à la vitesse du fluide et à la manoeuvre du papillon.

Pour les robinets de plus grande dimension, des rainures en forme de gorges épaulées sont réalisées sur la face intérieure du corps, tandis que des nervures de forme complémentaire sont réalisées sur la face extérieure de la manchette en élastomère. Cette construction est notamment décrite dans le brevet FR 2820184.

D'autres conceptions, comme celle décrite dans le document FR 2260041, prévoient un collage, voire un moulage des nervures dans les rainures.

D'autres conceptions, comme celle décrite dans la demande de brevet FR 10 00267, prévoient un surmoulage de la bague d'étanchéité par une résine en interposant un agent de démoulage.

Cet art antérieur, définissant des manchettes d'étanchéité en élastomère comportant des nervures à installer dans des formes complémentaires du corps, présente l'inconvénient d'être difficile à mettre en place, en raison de la grande déformation de l'élastomère nécessaire pour passer les arêtes d'ancrage. De plus, il est difficile de détecter un défaut de mise en place, car le montage des rainures ou des joues est réalisé en aveugle.

Les variantes consistant à mouler ou coller les bagues d'étanchéité interdisent le démontage ultérieur de ces bagues et nécessitent donc un reconditionnement de ces robinets en usine.

L'autre variante surmoulant la bague d'étanchéité sur le corps autorise l'interchangeabilité sur le site d'exploitation, mais nécessite, comme dans le premier cas, une déformation importante de l'élastomère des nervures en forme de tenon et, l'opération se faisant en aveugle, rien ne garantit la mise en place parfaite de ces nervures dans les rainures du corps.

Si les ancrages sont plus réduits, comme pour les petits diamètres, l'accrochage de la manchette en élastomère est moins bon et des déplacements et des déchaussages de cette manchette sont régulièrement observés dans des conditions limites de températures et/ou de pression ou de vide.

Dans le cas des robinets à papillon décalé et excentré, le joint de fonction assurant l'étanchéité de l'amont vers l'aval peut être monté soit sur le papillon, soit dans le corps.

Dans ces modes de construction, le joint est formé d'un demi-tore, tourné vers le siège, associé à une forme annulaire de section rectangulaire formant tenon. Ces deux formes sont liées entre elles par une section annulaire réduite par deux gorges latérales de forme demi-torique.

Les diverses parties assurent chacune une fonction particulière dans l'étanchéité.

Le demi-tore assure le contact avec le siège d'étanchéité et fournit la pression de contact, qui permet de garantir l'étanchéité.

Les gorges demi-tore permettent d'absorber le volume d'élastomère excédentaire, lors du contact du joint sur son siège en position d'étanchéité. Ceci garantit l'élasticité du joint et une certaine constance de la pression de contact.

Une section annulaire assure l'étanchéité statique à l'arrière du joint et permet l'ancrage du joint dans la structure, que ce joint soit monté dans le papillon ou dans le corps.

Un joint peut être maintenu en place par une bride fixée par des vis de maintien. Cette construction est souvent critiquée lors de l'utilisation de ces robinets sur des fluides chargés ou corrosifs, car les dépôts ou la corrosion des diverses pièces provoquent, au fil de l'usage, une impossibilité de démontage des vis et/ou des brides de serrage, ce qui rend le remplacement du joint impossible. Pour pallier cet inconvénient, bon nombre de constructeurs ont imaginé des joints à insérer dans des gorges sans vis, ni bride, en jouant sur les formes des joints et des gorges. Le montage du joint au moyen d'une bride permet un montage aisé, mais un démontage aléatoire après emploi, tandis que le montage en gorge sans bride, ni vis, rend le montage et la mise en place difficiles, voire très difficiles, et un démontage impossible sans détruire le joint d'étanchéité. FR1589005 décrit une vanne ayant une lentille et un piston qui n'est pas mis en position par le fluide, le piston étant mobile.

WO2011/141641 décrit un robinet à joint sans fluide. FR2415760 décrit un robinet suivant le préambule de la revendication 1.

L'invention pallie ces inconvénients par un robinet à papillon facile à monter et à démonter sans destruction.

Le robinet de contrôle d'un fluide suivant l'invention comprend un corps annulaire, un papillon solidaire d'un arbre de manoeuvre et pivotant librement autour d'un axe passant respectivement dans des ouvertures opposées diamétralement du corps et un joint d'étanchéité annulaire en élastomère logé dans une gorge de la face intérieure du corps, le bord du papillon venant alors en contact avec le joint dans une position de fermeture du robinet, le joint comprenant une section d'étanchéité dynamique et une section d'étanchéité statique logée dans la gorge comme décrit au US 4130285A. La section d'étanchéité statique se compose de deux lèvres latérales souples, de manière à pouvoir s'écarter l'une de l'autre et délimitant entre elles un espace empli d'une matière apte à s'écouler et indépendante du fluide à véhiculer ou à contrôler dans le robinet, le corps est percé de deux trous traversants débouchant dans la gorge, dont l'un est bouché par un bouchon amovible, et les conformations de la gorge et des lèvres sont telles que le joint est retenu dans la gorge, lorsque l'espace entre les lèvres est empli de la matière apte à s'écouler, et n'y est pas retenu, lorsque l'espace entre les lèvres n'est pas empli de la matière apte à s'écouler.

La matière apte à s'écouler est une matière ayant un Grade de Consistance NLGI compris entre 00 et 3, qui est une émulsion en phase huileuse, de type graisse, ou bien aqueuse, de type pâte, dont la constitution comportera un produit de base fluide ou visqueux, chargé ou non en matière solide, de très fine granulométrie, de l'ordre du micromètre et contenant un émulsifiant et un stabilisant pour garantir la stabilité du produit émulsifié. On s'assurera que les composants chimiques de cette matière sont compatibles avec la matière du joint d'étanchéité pour garantir la pérennité du blocage et la longévité de l'étanchéité.

Le grade de Consistance NLGI est déterminé suivant les méthodes d'essais et de mesures de la consistance des graisses de lubrification par cône de pénétration suivant les normes ASTM D217 et ISO 2137, qui définissent les outillages et la méthodologie d'essai tandis que les cônes de pénétration sont définis par la norme IP50. La mesure est réalisée sur un échantillon de matière à la température de 25°C, ayant, au préalable, été malaxée alternativement 60 fois dans un malaxeur défini suivant l'ASTM D217. L'échantillon est alors présenté sous un pénétromètre à cône et le cône est libéré, sur machine manuelle ou automatique, pour pénétrer librement dans le produit à tester. La profondeur de pénétration du cône est mesurée en dixième de millimètres après un temps de 5 secondes. Cette valeur est ensuite comparée à l'échelle NLGI qui détermine la classe de consistance du produit testé suivant la correspondance ci-dessous:

| Pénétration en 1/10^{ème} de mm | Grade de Consistance NLGI |
|---|---|
| 445-475 | 000 |
| 400-430 | 00 |
| 355-385 | 0 |
| 310-340 | 1 |
| 265-295 | 2 |
| 220-250 | 3 |
| 175-205 | 4 |
| 130-160 | 5 |
| 85-115 | 6 |

De manière avantageuse, la matière peut être des billes. Les billes qui doivent passer dans les trous ont, notamment, un diamètre de 1 à 5 mm eh fonction de la taille de la gorge et du profil du joint et sont réalisées en matériau métallique inoxydable ou en matériau plastique dont la dureté sera supérieure à 50 Shore D

De façon avantageuse, la matière apte à s'écouler peut être une matière pulvérulente, sèche, dont la granulométrie sera comprise entre 100 µm et 200 µm.

La matière apte à s'écouler, qui est contenue dans l'espace entre les deux lèvres, est autre que celle que le robinet doit empêcher de passer ou laisser passer dans une tuyauterie dans laquelle il est monté.

Suivant un mode de réalisation, les faces latérales des lèvres, tournées vers les faces latérales de la gorge sont lisses, parallèles entre elles et perpendiculaires à l'axe de la tuyauterie, dans la partie des lèvres du côté de l'extérieur, et ménagent, dans la partie des lèvres du côté de l'intérieur, deux épaulements rentrants et conjugués de deux épaulements de la gorge.

Suivant un autre mode de réalisation, les faces latérales des lèvres tournées vers les faces latérales de la gorge sont inclinées en faisant un angle α avec l'axe (en coupe transversale) médian du joint en vue suivant une coupe transversale, les faces de la gorge, du côté de l'intérieur, sont inclinées et font un angle β avec l'axe médian du joint et α > β. Suivant ce mode de réalisation on vérifiera que l'angle α ait une valeur comprise entre 15° et 45°, que la valeur de β soit comprise entre 10° et 40° et que α - β soit toujours égal ou supérieur à 5°.

Suivant un mode de réalisation particulièrement achevé, les lèvres ont ensemble la forme d'un trapèze, dont la petite base, du côté intérieur, est plus grande que la plus grande largeur de la section d'étanchéité dynamique du joint et dont la hauteur est plus petite que la distance allant des épaulements de la gorge au fond de la gorge. De préférence, l'espace délimité entre les lèvres est en forme de vé pointant vers la section d'étanchéité dynamique du joint.

Suivant un mode de réalisation, le joint est sous la forme d'une manchette ayant des tenons, à lèvres souples délimitant entre elles un espace, logés dans des rainures sur la face annulaire intérieure et sur les faces latérales du corps, des paires de trous opposés diamétralement débouchant dans les rainures, un trou d'une paire étant bouché par un bouchon et les rainures étant emplies de la matière apte à s'écouler.

Pour monter le joint :
- on introduit la section d'étanchéité statique du joint dans la gorge, jusqu'à ce que les conformations de la gorge et des lèvres puissent se conjuguer, notamment jusqu'à ce que les épaulements du joint aient dépassé ceux de la gorge ou jusqu'à ce que les faces inclinées des lèvres aient atteint les faces inclinées de la gorge,
- on débouche l'un des trous par le bouchon et on met l'autre trou en communication, avec interposition d'un clapet antiretour, avec une pompe refoulant de la matière apte à s'écouler, jusqu'à ce que de la matière sorte par le trou débouché, et
- on bouche ce trou par le bouchon.

Pour démonter le joint :
- on retire le bouchon du trou,
- on met l'autre trou en communication avec une source de gaz sous pression jusqu'à ce que toute la matière apte à s'écouler soit expulsée de la gorge. Le joint est alors facilement retiré de sa gorge d'autant plus que le gaz aide à l'expulsion du joint de sa gorge.

Le gaz est notamment de l'air comprimé à une pression relative comprise entre une pression légèrement supérieure à la pression atmosphérique et deux bars relatifs.

Aux dessins annexés, donnés uniquement à titre d'exemple :
- la Figure 1 est une vue en coupe d'un robinet suivant l'invention par un plan passant par l'arbre de manoeuvre du papillon ;
- la Figure 2 est une vue en coupe d'un robinet suivant l'invention par un plan passant par l'axe de la tuyauterie ;
- la Figure 3 est une vue en coupe du joint du robinet ;
- la Figure 4 est une vue en coupe de ce joint, alors qu'il est comprimé par le papillon ;
- la Figure 5 est une vue en coupe du joint et de la gorge du corps, alors que le joint est en train d'être introduit dans la gorge ;
- la Figure 6 est une vue correspondant à la Figure 5, alors que le joint est introduit complètement dans la gorge ;
- la Figure 7 est une vue en coupe correspondant aux Figures 5 et 6, alors que les lèvres du joint ont été écartées par de la matière apte à s'écouler ;
- les Figures 8, 9 et 10 sont trois vues analogues aux Figures 5, 6 et 7 précédentes d'une variante de réalisation ;
- les Figures 11a à 11d illustrent des joints et rainures de la technique antérieure modifiés suivant l'invention ; et
- la Figure 12 est une vue en coupe par un plan passant par l'axe de la tuyauterie d'un robinet à papillon centré.

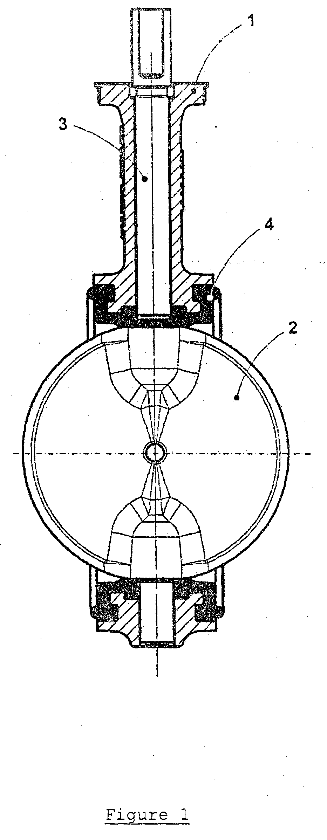

Le robinet à papillon centré de petit diamètre représenté à la Figure 1 est un robinet centré de petit diamètre. Une manchette annulaire 4, enserre la face intérieure du corps 1, formant l'étanchéité de l'amont vers l'aval et inversement en coopérant avec le papillon 2. Cette même manchette 4 enveloppe, de plus, tout ou partie de chacune des faces latérales du corps 1, pour assurer l'étanchéité vers l'extérieur aux brides de raccordement de la tuyauterie.

Pour favoriser le placement et le maintien en position de cette manchette 4, des ancrages 13 sont ménagés dans le corps 1 et des formes complémentaires sont prévues sur la manchette, pour favoriser le maintien en position de cette manchette lors des sollicitations dues à la pression ou au vide, à la vitesse du fluide et à la manoeuvre du papillon.

### Description d'un joint d'étanchéité pour robinet décalé et excentré

Dans le cas d'un joint d'étanchéité annulaire pour robinet à papillon décalé et excentré, le joint d'étanchéité peut être placé dans le papillon ou dans le corps. Dans les deux cas le principe de base reste le même. On décrira un robinet avec le joint d'étanchéité implanté dans le corps.

L'étanchéité de l'amont vers l'aval du robinet, en une position où le papillon est fermé, est obtenue par une pression de contact entre le joint d'étanchéité et son siège qui est supérieure à la différence de pression entre amont et aval du fluide à étancher. Cette pression de contact est obtenue par une interférence dimensionnelle du diamètre de contact entre le siège et le joint.

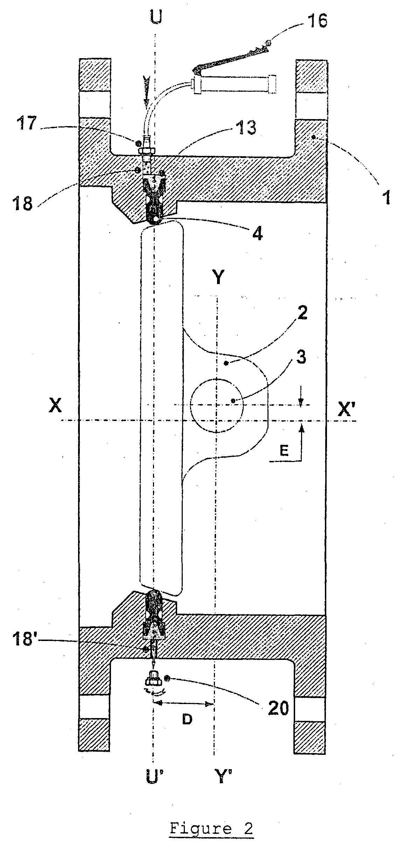

La Figure 2 représente un robinet à papillon, dont l'obturateur est décalé d'une valeur D et excentré d'une valeur E. Cette cinématique permet une séparation rapide du joint 4 de son siège 2 et limite donc le frottement entre les deux pièces et donc l'usure pour une meilleure longévité du robinet.

Un joint d'étanchéité 4 élaboré en élastomère, de forme annulaire, est logé dans une gorge 13 dans le corps 1. Cette gorge est réalisée concentriquement à l'axe de la tuyauterie suivant l'axe X-X' et suivant un plan perpendiculaire à cet axe X-X' passant par l'axe U-U', qui se trouve être le plan de contact et d'étanchéité entre le joint 4 et le papillon 2. Cette gorge 13 est percée de deux trous radiaux 18 et 18' diamétralement opposés et débouchant dans la gorge 13. Le premier trou 18 est raccordé à une pompe 16 par l'intermédiaire d'un clapet de non-retour 17, tandis que le trou 18' est fileté pour recevoir un bouchon 20 qui permet d'occlure ce trou.

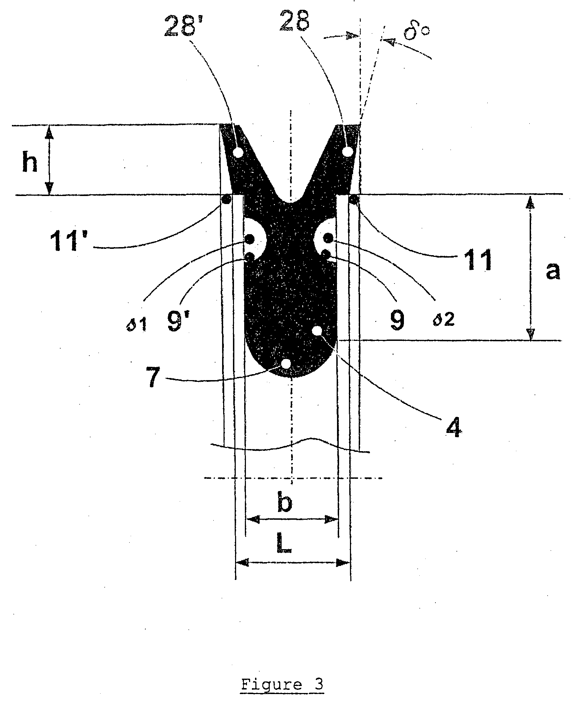

Pour garantir un fonctionnement correct de ce type d'étanchéité, le joint d'étanchéité 4 a une forme très particulière, capable de coopérer avec la gorge 13. Il est décrit, ci-dessous, le joint 4 illustré à la Figure 3.

Le joint d'étanchéité 4 est constitué d'un anneau dont la face intérieure 7, destinée à entrer en contact avec le papillon, est en forme de demi-tore. Ce demi-tore est associé à une section rectangulaire définie par ses côtés a X b et dont les faces latérales sont chacune pourvue d'une gorge demi-torique 9 et 9'. Le volume de ces deux demi-tores, fonction des 2 sections ***S1*** et ***s2***, est prévu pour absorber la surcompression volumique de l'élastomère, lorsqu'il est comprimé par le siège en position de fermeture. Ce volume ***s*** est lié aux sections ***s1*** et ***s2*** par la relation ***s*** < ***s1*** + ***s2***.

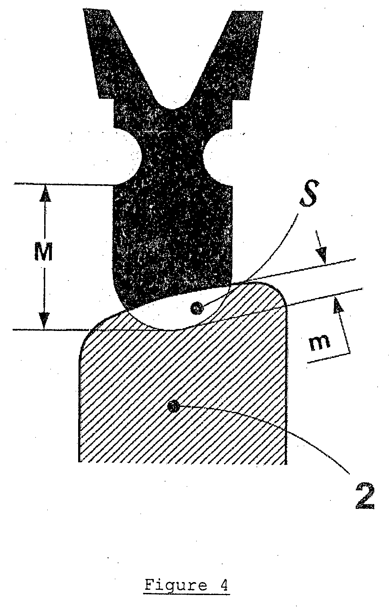

De plus, suivant la Figure 4 et pour obtenir une étanchéité satisfaisante, le rapport de la valeur de compression linéaire "m" par rapport à la hauteur totale comprimée "M" est compris entre 10% et 30%, pour obtenir une parfaite étanchéité jusqu'à 25 bar suivant le type, la dureté et la rémanence de l'élastomère utilisé.

A la section d'étanchéité dynamique, en contact avec le siège, est associée une section d'étanchéité statique, qui assure la fixation et le blocage du joint. Cette section a la forme d'un trapèze, dont la petite base L est supérieure à la cote b de la section d'étanchéité dynamique et forme avec celle-ci deux épaulements 11 et 11', qui assurent un blocage mécanique positif du joint dans le corps.

La face externe du joint formant la grande base du trapèze est évidée d'une section triangulaire isocèle, qui définit avec les côtés non-parallèles du trapèze deux lèvres 28 et 28', dont l'angle δ° avec la verticale, à la figure 3, garantit que ces lèvres porteront bien sur les faces latérales de la gorge 13 du corps. L'angle δ° vaut entre 10° et 30°.

Pour assurer à coup sûr la mise en place du joint 4 dans la gorge 13 du corps 1, la valeur h du talon du joint sera significativement inférieure à la valeur de profondeur H de la gorge 13.

### Description du montage du joint

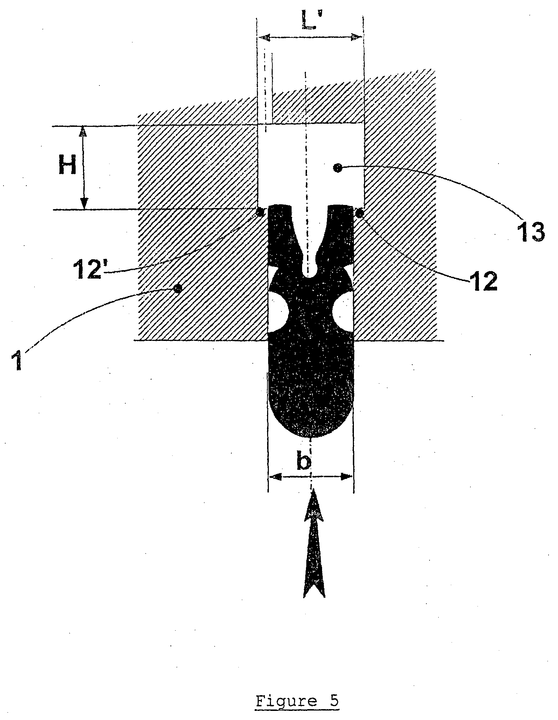

La Figure 5 décrit la forme de la gorge 13 réalisée dans le corps 1. Cette gorge réalisée sur la face intérieure du corps 1 est constituée de deux sections rectangulaires dont la première, intérieure, est de largeur valant b+ un jeu fonctionnel, de manière à laisser passer sans frottement la section d'étanchéité dynamique ou première partie du joint valant b. Cette section débouche dans une section plus large, valant L' et de hauteur H suffisante pour que le joint, introduit dans cette gorge et portant dans le fond de la gorge, il soit garanti que les épaulements 11 et 11' du joint aient dépassé les arêtes 12 et 12' de cette gorge.

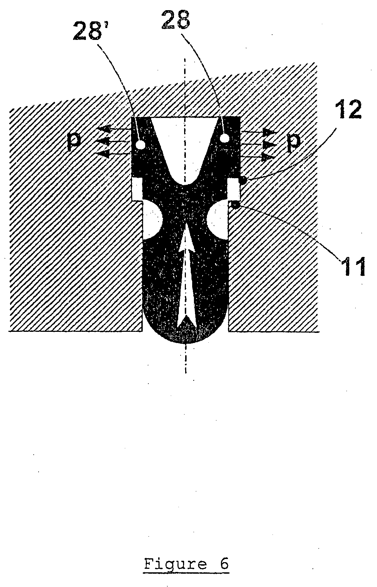

De cette manière et suivant la Figure 6, les lèvres 28 et 28' peuvent venir se plaquer contre les faces latérales de la gorge et exercent une légère pression p sur celles-ci, due à la valeur de la précontrainte angulaire δ°, lorsque le joint est poussé dans le sens de la flèche dans la gorge 13.

Par rapport aux joints de l'art antérieur, dont les sections sont massives avec des accrochages latéraux rendant la mise en place dans les gorges très difficiles, l'invention présente l'avantage de permettre l'introduction du joint dans la gorge sans effort, puisque, ne comportant pas de partie massive, il se déforme, permettant qu'aucune masse ne dépasse la cote de b.

### Description du blocage du joint

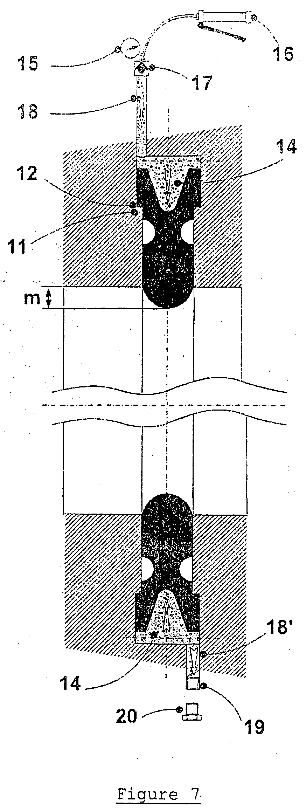

Le joint d'étanchéité 4 étant placé en fond de gorge, un espace 14 est formé par le fond de la gorge et par l'arrière en vé du joint comme montré à la Figure 7.

Par le trou 18 débouchant dans cette espace 14, il est introduit une matière liquide, visqueuse, de type graisse, au moyen d'une pompe 16, qui peut être manuelle ou mécanisée. La matière sera choisie pour avoir un grade de viscosité NLGI compris entre 00 et 3. Un manomètre 15 permet de contrôler la pression appliquée sur le joint, tandis que le clapet anti-retour 17 évite le retour éventuel de matière vers la pompe et maintient la pression contre le talon du joint.

Le bouchon fileté 20 du trou 18', diamétralement opposé au trou 18, est dévissé et enlevé pour permettre à l'air contenu dans la gorge de s'échapper, lorsque la matière est introduite par le trou opposé.

Lorsque tout l'espace 14 est empli de matière, celle-ci commence à s'échapper par le trou opposé à son introduction. Le bouchon 20 est alors remis en place et serré pour obturer le trou 18' taraudé.

La fin du gonflage de l'espace 14 au moyen de la pompe 6 provoque le déplacement du joint 4 vers l'intérieur du corps 1, jusqu'à ce que les épaulements 12 et 12' du joint viennent en contact avec les épaulements 11 et 11' du corps. A ce moment, le joint dépasse d'une valeur m indiquant la mise en place correcte du joint. La pompe est alors déconnectée et le robinet prêt à fonctionner.

### Description du démontage du joint

Pour démonter le joint 4 du corps 1, il est nécessaire de retirer le bouchon 20 et de raccorder l'orifice 18' à un récipient capable de recueillir la matière en provenance de l'espace 14. Après cette opération, une tuyauterie raccordée à une source de gaz sous pression est connectée au clapet de non-retour 17, la pression du gaz injecté dans l'espace 14 derrière le joint va chasser la matière visqueuse, qui va s'écouler par le trou 18' opposé à l'introduction de gaz. Lorsque suffisamment de matière visqueuse est retirée, la pression pousse sur le vé à l'arrière du joint. Sous l'effet de la pression de gaz P, le joint 4, qui n'est plus tenu par ses lèvres 28 et 28' contre les épaulements 11 et 11' du corps 1, se trouve expulsé de sa gorge 13. Le joint est démonté le plus simplement possible par déformation de ses lèvres de retenue et de blocage.

La matière apte à s'écouler peut avantageusement être remplacée par une matière pulvérulente ou bien par des billes de petite dimension, dont le diamètre peut varier de 1 à 5 mm.

### Variantes pour papillon décalé

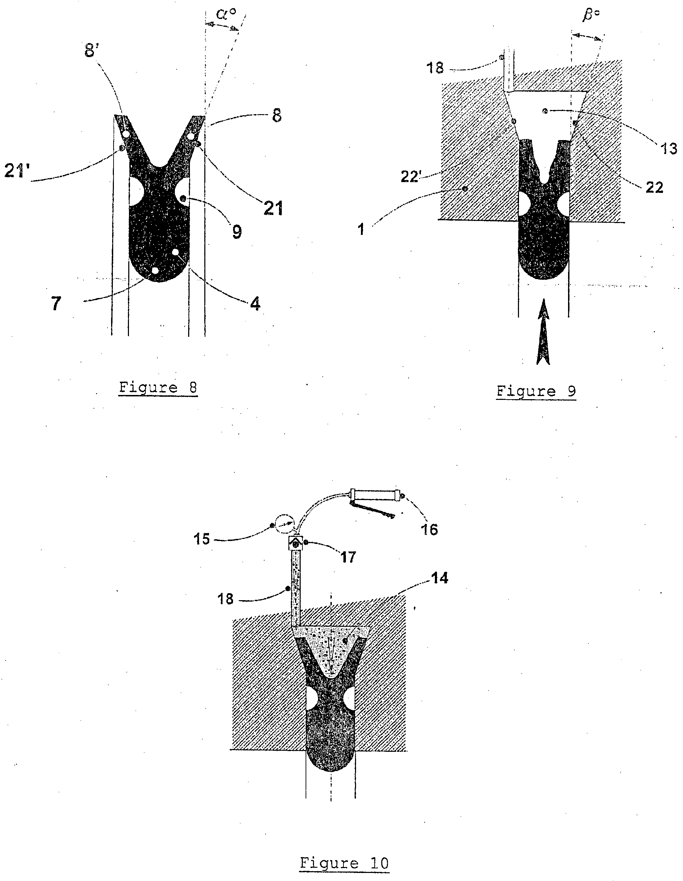

La description ci-dessus montre un joint 4 en élastomère, pourvu de deux lèvres souples 28 et 28' avec épaulement 12 et 12'. Toutes variantes de formes de ces lèvres avec ou sans épaulement de positionnement et de blocage peuvent être envisagées. Les Figures 8, 9 et 10 montrent un exemple de réalisation d'un joint 4 avec des lèvres 21 et 21', inclinées et sans épaulement. Ce mode de réalisation impose que l'angle α° soit supérieur à l'angle β°. L'angle α vaut de 15° à 45° tandis que l'angle β vaut de 10° à 40°.

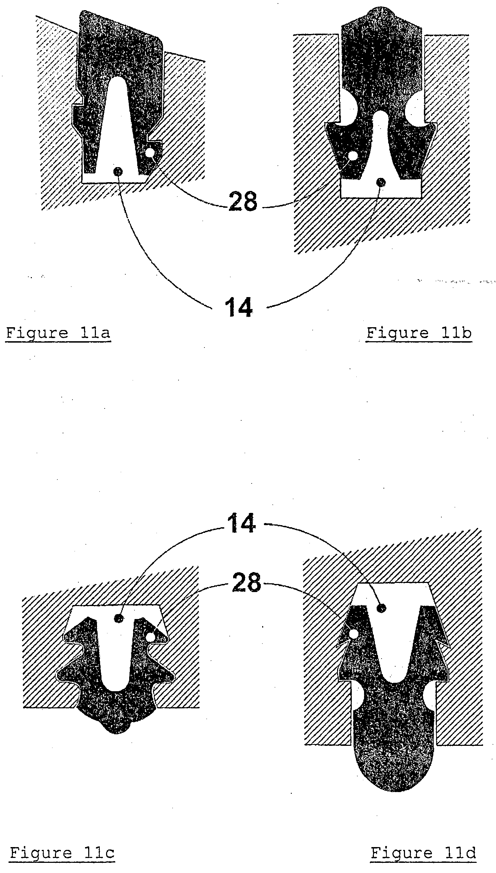

Les tenons des joints décrits dans les brevets antérieurs ne permettent pas un démontage du joint sans déchirer le profil et détruire le joint. De plus, même en détruisant le joint, l'extraction du joint de sa gorge est une opération longue et très difficile. Le concept de doubles lèvres écartées par une matière susceptible de s'écouler peut très bien être appliqué aux robinets antérieurs, pour obtenir des joints assemblables et démontables aisément. Les Figures 11a à 11d montrent une adaptation de ces profils suivant l'invention, par formation d'un espace à emplir d'une matière susceptible de s'écouler entre deux lèvres souples, au lieu d'avoir une deuxième partie pleine et/ou rigide, dont des lèvres la constituant ne peuvent pas s'écarter l'une de l'autre.

L'invention peut s'appliquer aux robinets à papillon centré et manchette d'étanchéité enveloppante. Cette manchette assure les trois fonctions d'étanchéité principales demandées à un robinet, à savoir, l'étanchéité vers l'extérieur aux brides de raccordement de tuyauterie, l'étanchéité vers l'extérieur aux passages des axes de pivotement et de manoeuvre et l'étanchéité interne de l'amont vers l'aval du médium véhiculé.

Afin d'assurer ces fonctions d'étanchéité, une manchette classique est ancrée dans le corps par des épaulement ou encastrement, pour les robinets de petit diamètre, et des tenons en forme de T ou de harpon, qui coopèrent avec les formes de rainures du corps, pour les robinets de grand diamètre. Une description des ces constructions a déjà été faite dans les documents WO 93/22588, FR 2570789, FR 2260041, EP 0156581 ou GB 1 508 283

On décrit ci-dessous l'invention, décrite précédemment pour les robinets excentrés et décalés, appliquée aux robinets centrés.

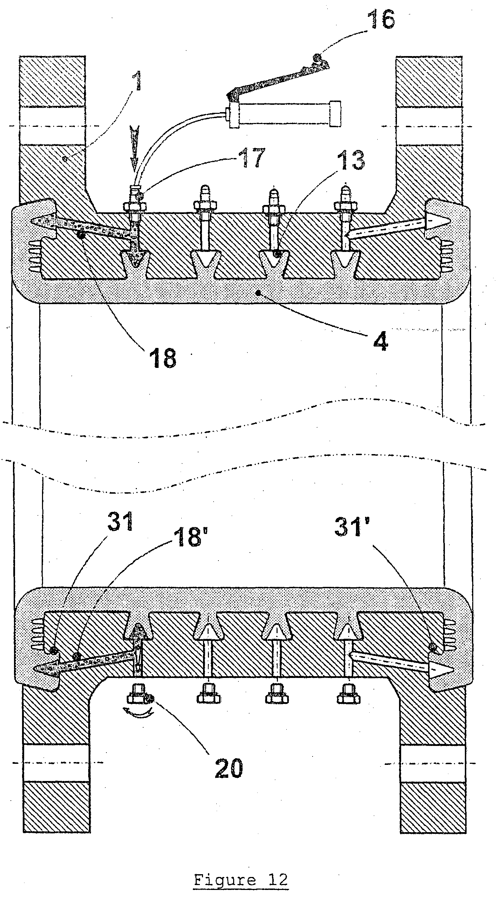

La Figure 12 montre un robinet à papillon en coupe, dont le corps 1 est pourvu de rainures trapézoïdales 13 sur sa face annulaire interne, ainsi que des rainures 31 et 31' de même forme sur ses faces latérales.

Ces rainures 13 et 31 communiquent avec deux ensembles de trous 18 diamétralement opposés, dont les uns sont équipés d'un clapet de non-retour 17 relié par un tube flexible à une pompe 16 et les autres taraudés sont prévus pour recevoir un bouchon fileté 20.

La manchette d'étanchéité 4 est conçue de manière à ce que les tenons en regard de chacune des rainures 13 et 31 soient pourvus de deux lèvres souples. Cette disposition permet une mise en place aisée de la manchette sans effort, puis une matière visqueuse est injectée par la pompe 6 dans les rainures 13 et 31 par les trous 18, jusqu'à remplir complètement la gorge et jusqu'à ce que la matière sorte par le trou opposé au trou d'injection. A ce moment, le bouchon 20 est remis en place et serré de manière étanche. Les gorges étant emplies de matière apte à s'écouler, les tenons sont bloqués dans leur gorge. Ils retiennent ainsi la manchette 4 sans que celle-ci ne puisse se déchausser.

Comme pour le joint des robinets décalés, le démontage du joint s'effectue en chassant la matière visqueuse au moyen d'un gaz faiblement comprimé, qui chasse la matière visqueuse de la gorge après avoir enlevé les bouchons 20.

## Revendications

1. Robinet de contrôle d'un fluide comprenant un corps (1) annulaire, un papillon (2) solidaire d'un arbre (3) de manoeuvre et pivotant librement autour d'un axe (3') passant respectivement dans des ouvertures opposées diamétralement du corps (1) et un joint (4) d'étanchéité annulaire en élastomère logé dans une gorge (13) de la face intérieure du corps (1), le bord du papillon venant alors en contact avec le joint dans une position de fermeture du robinet, le joint (4) comprenant une section d'étanchéité dynamique et une section d'étanchéité statique logée dans la gorge (13), la section d'étanchéité statique se composant de deux lèvres (28, 28') latérales souples, de manière à pouvoir s'écarter l'une de l'autre et délimitant entre elles un espace empli d'une matière apte à s'écouler et indépendante du fluide à contrôler dans le robinet,
les conformations de la gorge (13) et des lèvres (28, 28') étant telles que le joint est retenu dans la gorge (13), lorsque l'espace entre les lèvres (28, 28') est empli de la matière apte à s'écouler, et n'y est pas retenu, lorsque l'espace entre les lèvres (28, 28') n'est pas empli de la matière apte à s'écouler,
**caractérisé en ce que** le corps (1) est percé de deux trous (18, 18') traversants débouchant dans la gorge (13), dont l'un est bouché par un bouchon (20) amovible.

2. Robinet suivant la revendication 1, **caractérisé en ce que** la matière apte à s'écouler est une matière ayant un indice de viscosité NLGI compris entre 00 et 3, des billes ou une matière pulvérulente.

3. Robinet suivant la revendication 1 ou 2, **caractérisé en ce que** les faces latérales des lèvres (28, 28') tournées vers les faces latérales de la gorge sont lisses dans la partie des lèvres du côté de l'extérieur et ménagent, dans la partie des lèvres du côté de l'intérieur, deux épaulements rentrants et conjugués de deux épaulements (11, 11') de la gorge (13).

4. Robinet suivant la revendication 1 ou 2, **caractérisé en ce que** les faces latérales des lèvres (21, 21') tournées vers les faces latérales de la forge sont inclinées en faisant un angle α avec l'axe (en coupe transversale) médian du joint, les faces de la gorge, du côté de l'intérieur, sont inclinées et font un angle β avec l'axe médian du joint et α > β.

5. Robinet suivant la revendication 3, **caractérisé en ce que** les lèvres ont ensemble la forme d'un trapèze, dont la petite base, du côté intérieur, est plus grande que la plus grande largeur de la section d'étanchéité dynamique du joint et dont la hauteur est plus petite que la distance allant des épaulements de la gorge au fond de la gorge.

6. Robinet suivant l'une des revendications précédentes, **caractérisé en ce que** l'espace délimité entre les lèvres est en forme de vé pointant vers la section d'étanchéité du joint.

7. Robinet suivant l'une des revendications précédentes, **caractérisé en ce que** le joint est sous la forme d'une manchette ayant des tenons, à lèvres souples délimitant entre elles un espace, logés dans des rainures sur la face annulaire intérieure et sur les faces latérales du corps, des paires de trous opposés diamétralement débouchant dans les rainures, un trou d'une paire étant bouché par un bouchon et les rainures étant emplies de la matière apte à s'écouler.

8. Procédé de montage du joint du robinet suivant l'une des revendications précédentes, **caractérisé en ce que** :
- on introduit la section d'étanchéité statique du joint dans la gorge, jusqu'à ce que les conformations de la gorge et des lèvres puissent se conjuguer, notamment jusqu'à ce que les épaulements du joint aient dépassé ceux de la gorge ou jusqu'à ce que les faces inclinées des lèvres aient atteint les faces inclinées de la gorge,
- on débouche l'un des trous par le bouchon et on met l'autre trou en communication, avec interposition d'un clapet antiretour, avec une pompe refoulant de la matière apte à s'écouler, jusqu'à ce que de la matière sorte par le trou débouché, et
- on bouche ce trou par le bouchon.

9. Procédé de démontage du joint du robinet suivant l'une des revendications 1 à 6, **caractérisé en ce que** :
- on retire le bouchon du trou,
- on met l'autre trou en communication avec une source de gaz sous pression jusqu'à ce que le joint soit expulsé de la gorge.

## Patentansprüche

1. Ventil zum Steuern eines Fluids, umfassend ein ringförmiges Gehäuse (1), eine Drosselklappe (2), fest verbunden mit einer Betätigungswelle (3) und sich frei um eine Achse (3') drehend, die jeweils in diametral gegenüberliegende Öffnungen des Gehäuses (1) verläuft, und eine ringförmige Dichtung (4) aus Elastomer, die in eine Nut (13) der Innenfläche des Gehäuses (1) eingelegt ist, wobei der Rand der Drosselklappe in einer Schließstellung des Ventils in Kontakt mit der Dichtung kommt, wobei die Dichtung (4) einen dynamischen Dichtungsabschnitt und einen in der Nut (13) liegenden statischen Dichtungsabschnitt umfasst, wobei der statische Dichtungsabschnitt so aus zwei seitlichen weichen Lippen (28, 28') besteht, dass sie sich voneinander entfernen können und zwischen sich einen Zwischenraum umschließen, der mit einem fließfähigen und von dem im Ventil zu steuernden Fluid unabhängigen Stoff gefüllt ist,
wobei die Gestaltungen der Nut (13) und der Lippen (28, 28') derart sind, dass die Dichtung in der Nut (13) festgehalten ist, wenn der Zwischenraum zwischen den Lippen (28, 28') mit dem fließfähigen Stoff gefüllt ist, und dort nicht festgehalten ist, wenn der Zwischenraum zwischen den Lippen (28, 28') nicht mit dem fließfähigen Stoff gefüllt ist,
**dadurch gekennzeichnet, dass** das Gehäuse (1) von zwei Löchern (18, 18') durchbohrt ist, die in der Nut (13) münden, von denen eines durch einen abnehmbaren Stopfen (20) verschlossen ist.

2. Ventil nach Anspruch 1, **dadurch gekennzeichnet, dass** der fließfähige Stoff ein Stoff mit einer NLGI-Konsistenzklasse zwischen 00 und 3 ist, aus Kugeln besteht oder ein pulverförmiger Stoff ist.

3. Ventil nach Anspruch 1 oder 2, **dadurch gekennzeichnet, dass** die den Seitenflächen der Nut zugewandten Seitenflächen der Lippen (28, 28') im Bereich der Lippen auf der Außenseite glatt sind und im Bereich der Lippen auf der Innenseite zwei zurückspringende Absätze aufweisen, die mit zwei Absätzen (11, 11') der Nut (13) gekoppelt sind.

4. Ventil nach Anspruch 1 oder 2, **dadurch gekennzeichnet, dass** die den Seitenflächen der Nut zugewandten Seitenflächen (21, 21') der Lippen geneigt sind und einen Winkel α zur Mittelachse (im Querschnitt) der Dichtung bilden, die Flächen der Nut auf der Innenseite geneigt sind und einen Winkel β zur Mittelachse (im Querschnitt) der Dichtung bilden und α > β.

5. Ventil nach Anspruch 3, **dadurch gekennzeichnet, dass** die Lippen zusammen die Form eines Trapezes aufweisen, dessen kleine Basis auf der Innenseite größer ist als die größte Breite des dynamischen Dichtungsabschnitts der Dichtung, und dessen Höhe kleiner ist als der Abstand von den Absätzen der Nut zum Boden der Nut.

6. Ventil nach einem der vorhergehenden Ansprüche, **dadurch gekennzeichnet, dass** der zwischen den Lippen umgrenzte Zwischenraum die Form eines V aufweist, das zum Dichtungsabschnitt der Dichtung weist.

7. Ventil nach einem der vorhergehenden Ansprüche, **dadurch gekennzeichnet, dass** die Dichtung die Form einer Manschette mit Zapfen mit weichen Lippen aufweist, die zwischen sich einen Zwischenraum umschließen und in Nuten auf der ringförmigen Innenfläche und auf den Seitenflächen des Gehäuses liegen, wobei Paare diametral gegenüberliegender Löcher in die Nuten münden, ein Loch aus einem Paar durch einen Stopfen verschlossen ist und die Nuten mit einem fließfähigen Stoff gefüllt sind.

8. Montageverfahren der Dichtung des Ventils nach einem der vorhergehenden Ansprüche, **dadurch gekennzeichnet, dass**:
- der statische Dichtungsabschnitt der Dichtung in die Nut eingeführt wird, bis sich die Gestaltungen der Nut und der Lippen koppeln können, insbesondere bis die Absätze der Dichtung an denen der Nut vorbeigelangt sind oder bis die geneigten Flächen der Lippen die geneigten Flächen der Nut erreicht haben,
- an einem der Löcher der Stopfen entfernt wird und das andere Loch über ein Rückschlagventil mit einer Pumpe verbunden wird, die den fließfähigen Stoff fördert, bis der Stoff aus dem geöffneten Loch austritt, und
- dieses Loch mit dem Stopfen verschlossen wird.

9. Demontageverfahren der Dichtung des Ventils nach einem der Ansprüche 1 bis 6, **dadurch gekennzeichnet, dass**:
- der Stopfen aus dem Loch entfernt wird,
- das andere Loch mit einer unter Druck stehenden Gasquelle verbunden wird, bis die Dichtung aus der Nut herausgetrieben wird.

## Claims

1. Fluid-controlling valve comprising an annular body (1), a butterfly plate (2) which is integral with an operating shaft (3) and pivots freely about a spindle (3'), which shaft and spindle respectively pass through within diametrically opposed openings in the body, and an annular elastomeric seal (4) which is housed within a recess (13) in the inner face of the body (1), the edge of the plate coming into contact with the seal when the valve is in a closing position, said seal (4) comprising a dynamic sealing section and a static sealing section which is housed within the recess (13), in which the static sealing section comprises two flexible lateral lips (28, 28'), such that they are capable of moving apart from one another and delimit, between them, a space which is filled with a flowable material which is independent of the fluid to be controlled within the valve;
in which the structures of the recess (13) and of the lips (28, 28') are such that the seal is retained within the recess (13) when the space between the lips (28, 28') is filled with the flowable material, and is not retained therein when the space between the lips (28, 28') is not filled with the flowable material, **characterised in that** the body (1) is perforated by two through-holes (18, 18') which open into the recess (13), one of which holes is plugged by a removable plug (20).

2. Valve according to Claim 1, **characterised in that** the flowable material is a material having an NLGI viscosity index of between 00 and 3, balls or a pulverulent material.

3. Valve according to Claim 1 or 2, **characterised in that** those lateral faces of the lips (28, 28') which face towards the lateral face of the recess are smooth in the part of the lips towards the outside, and provide, in the part of the lips towards the inside, two shoulders which are inset and are paired up with two shoulders (11, 11') in the recess (13).

4. Valve according to Claim 1 or 2, **characterised in that** those lateral faces of the lips (21, 21') which face towards the lateral faces of the recess are inclined, forming an angle α with the median axis (in cross-section) of the seal, the faces of the recess, towards the inside, are inclined and form an angle β with the median axis of the seal, and α > β.

5. Valve according to Claim 3, **characterised in that** the lips have, together, the shape of a trapezium whose small base, on the inner side, is larger than the larger width of the dynamic sealing section of the seal, and whose height is smaller than the distance extending from the shoulders in the recess to the bottom of said recess.

6. Valve according to one of the preceding claims, **characterised in that** the space delimited between the lips is in the shape of a V which points towards the sealing section of the seal.

7. Valve according to one of the preceding claims, **characterised in that** the seal is in the form of a liner having studs with flexible lips that delimit a space between them, which studs are housed in grooves on the inner annular face and on the lateral faces of the body, pairs of diametrically opposed holes opening into said grooves, one hole in a pair being plugged by a plug and the grooves being filled with the flowable material.

8. Method of fitting the seal of the valve according to one of the preceding claims, **characterised in that**:
- the static sealing section of the seal is inserted in the recess until the structures belonging to the recess and to the lips are able to pair up, in particular until the shoulders on the seal have passed beyond those in the recess or until the inclined faces of the lips have reached the inclined faces of said recess;
- one of the holes is unplugged by means of the plug and the other hole is brought into communication, with the interposition of a non-return flap-valve, with a pump which delivers the flowable material, until said material comes out through the unplugged hole; and
- said hole is plugged by means of the plug.

9. Method of removing the seal of the valve according to one of Claims 1 to 6, **characterised in that**:
- the plug is withdrawn from the hole; and
- the other hole is brought into communication with a source of pressurised gas until the seal is expelled from the recess.
